# EUROPÄISCHE PATENTSCHRIFT

(11) **EP 1 812 243 B1**
(45) Veröffentlichungstag und Bekanntmachung des Hinweises auf die Patenterteilung: **12.08.2015**
(21) Anmeldenummer: 05792164.5
(22) Anmeldetag: 11.10.2005
(51) Int. Cl.: B42D 15/00

(54) **SICHERHEITSELEMENT MIT MAGNETISCHEN MATERIALEN, MIT GLEICHER REMANENZ UND UNTERSCHIEDLICHER KOERZITIVFELDSTÄRKE**
SECURITY ELEMENT COMPRISING MAGNETIC MATERIALS HAVING THE SAME REMANENCE AND A DIFFERENT COERCIVE FIELD INTENSITY
ELEMENT DE SECURITE COMPORTANT DES MATERIAUX MAGNETIQUES PRESENTANT LA MEME REMANENCE ET UNE INTENSITE DE CHAMP COERCITIVE DIFFERENTE

(30) Priorität: 14.10.2004 DE 102004049999
(43) Veröffentlichungstag der Anmeldung: 01.08.2007
(73) Patentinhaber: Giesecke & Devrient GmbH, 81677 München (DE)
(72) Erfinder: SCHÜTZMANN, Jürgen, 85276 Pfaffenhofen (DE); SCHÜTT, Lothar, 85221 Dachau (DE)
(86) Internationale Anmeldenummer: PCT/EP2005/010934
(87) Internationale Veröffentlichungsnummer: WO 2006/042667

(56) Entgegenhaltungen:
- EP-A- 0 428 779
- EP-A- 0 748 896
- DE-A1- 2 545 959
- DE-A1- 2 754 267
- DE-A1- 2 834 287
- FR-A- 2 819 610

## Beschreibung

Die Erfindung betrifft ein Sicherheitselement zur Absicherung von Wertdokumenten, das magnetisches Material aufweist. Ferner betrifft die Erfindung ein Wertdokument, ein Transfermaterial und Verfahren zur Herstellung derartiger Sicherheitselemente und Wertdokumente.

Bei einem Wertdokument im Sinne der Erfindung kann es sich um Banknoten, aber auch Aktien, Urkunden, Briefmarken, Schecks, Eintrittskarten, Fahrkarten, Flugscheine, Ausweise, Visasticker und Ähnliches sowie Etiketten, Siegel, Verpackungen, Sicherheitspapier oder andere Elemente für die Produktsicherung handeln. Die vereinfachende Benennung "Wertdokument" oder "Sicherheitselement" schließt deshalb im Folgenden stets Dokumente der genannten Art ein.

Es ist bekannt, daß Banknoten magnetisches Material aufweist, das zur Überprüfung der Echtheit der Banknoten verwendet wird. Derartiges magnetisches Material ist beispielsweise Bestandteil von Druckfarben und wird beim Drucken der Banknoten auf diese aufgebracht. Die beim Druck erzeugte Verteilung des magnetischen Materials kann zur Überprüfung der Echtheit der Banknoten ermittelt und mit einer Vorgabe verglichen werden. Weiterhin ist bekannt, daß magnetisches Material in auf der Banknote aufgebrachten Sicherheitselementen enthalten sein kann. So können beispielsweise Sicherheitsfäden magnetisches Material aufweisen, das auch derart aufgebracht sein kann, daß die Sicherheitsfäden eine Kodierung aufweisen, die zur Überprüfung der Echtheit der Banknote und/oder zur Feststellung der Art der Banknote (Währung, Denomination) verwendet werden kann.

Ein Problem derartiger Sicherheitselemente bzw. Wertdokumente mit magnetischem Material besteht darin, daß das magnetische Material und damit enthaltene Kodierungen jederzeit erkannt werden können. Dadurch ergibt sich die Gefahr, daß die Sicherheitselemente bzw. Wertdokumente ohne größere Probleme gefälscht werden können, da die Verteilung des magnetischen Materials wegen der leichten Erkennbarkeit nachgeahmt werden kann. Derartige Sicherheitselemente bzw. Wertdokumente sowie Verfahren zu deren Überprüfung sind beispielsweise aus EP 0 428 779 A1 und DE 28 34 287 A1 bekannt.

Der Erfindung liegt daher die Aufgabe zugrunde, einen Wertdokument, ein Transferelement und ein Sicherheitselement zu schaffen, die einfach herzustellen sein sollen und einen hohen Fälschungsschutz gewährleisten.

Weiterhin ist es Aufgabe der Erfindung, Verfahren zur Herstellung eines derartigen Sicherheitselements und Wertdokuments bereitzustellen.

Diese Aufgaben werden durch die Merkmale der unabhängigen Ansprüche gelöst. Weiterbildungen sind Gegenstand der Unteransprüche.

Gemäß der Erfindung weist das Sicherheitselement mindestens zwei magnetische Materialien auf, wobei die magnetischen Materialien eine unterschiedliche Koerzitivfeldstärke aufweisen und derart auf und/oder in das Sicherheitselement auf- und/oder eingebracht sind, daß ihre Remanenz gleich ist.

Die gleiche Remanenz der magnetischen Materialien wird bevorzugt durch unterschiedliche Schichtdicken und/oder unterschiedliche Konzentration der magnetischen Materialien erreicht.

Für die erfindungsgemäßen magnetischen Materialien bieten sich im Rahmen der Erfindung zahlreiche Variationsmöglichkeiten. So können die magnetischen Materialien bereichsweise, insbesondere in Form von Zeichen oder Mustern, vorgesehen sein, wobei es besonders bevorzugt ist, die unterschiedlichen Materialien direkt aneinander angrenzend anzubringen.

Das Sicherheitselement kann entweder direkt auf dem Wertdokument erzeugt oder auf einem separaten Substrat vorbereitet werden. Das Wertdokument bzw. das separate Substrat, auf dem sich das Sicherheitselement befindet, ist dabei in Bezug auf das verwendete Material in keiner Weise eingeschränkt. Bevorzugt handelt es sich aber um Papier oder Kunststoff, auch in Form von Folien. Bei einem separaten Substrat kann das Sicherheitselement beispielsweise als selbsttragendes Etikett, bevorzugt auf einem Kunststoffsubstrat, ausgebildet sein. Insbesondere ist das Sicherheitselement in Form eines Sicherheitsfadens ausgebildet.

Da es in einigen Fällen Schwierigkeiten bereiten kann, das Wertdokument direkt mit den magnetischen Materialien zu versehen, kann es alternativ sirinvoll sein, den Aufbau des Sicherheitselements zumindest teilweise auf einem Transfermaterial vorzubereiten.

Die magnetischen Materialien des Sicherheitselements können dabei in Endlosform auf ein Substrat auf- und/oder eingebracht werden, das mit einem Trägerband verbunden ist oder wird. Die Befestigung als Sicherheitselement auf ein zu sicherndes Wertdokument erfolgt dabei mit Hilfe einer Klebstoffschicht, die entweder auf das Wertdokument oder aber auf die oberste Schicht des Transfermaterials aufgebracht wird. Vorzugsweise wird hierfür ein Heißschmelzkleber verwendet. Um die Umrißform des Sicherheitselements festzulegen, kann entweder nur in den zu übertragenden Bereichen eine Klebstöffschicht vorgesehen werden oder der Klebstoff, wie beispielsweise ein Heißschmelzkleber, wird nur in den zu übertragenden Bereichen aktiviert. Nach dem Übertrag wird das Trägerband des Transfermaterials abgezogen und lediglich das Sicherheitselement verbleibt auf dem zu sichernden Wertdokument.

Bei dem Wertdokument, auf welches das Sicherheitselement aufgebracht wird, kann es sich beispielsweise um ein Sicherheitspapier, ein Sicherheitsdokument, aber auch um Produktverpackungen handeln. Auch andere Wertgegenstände, die eine sicherheitstechnische Absicherung benötigen, können selbstverständlich mit dem erfindungsgemäßen Sicherheitselement versehen werden.

Weitere Vorteile und Ausführungsformen der Erfindung werden anhand der Figuren näher erläutert. Die in den Figuren gezeigten Proportionen (insbesondere Schichtdicken) entsprechen nicht unbedingt den in der Realität vorliegenden Verhältnissen und dienen vornehmlich zur Verbesserung der Anschaulichkeit.

Die Erfindung wird aus Gründen der Übersichtlichkeit nur am Beispiel einer Banknote näher erläutert. Es ist aber offensichtlich, daß die Erfindung ohne weiteres für die oben erwähnten Wertdokumente verwendet werden kann.

Es zeigt:
- Figur 1: eine Banknote mit einem erfindungsgemäßen Sicherheitselement,
- Figur 2 und 3: verschiedene Ausführungsformen des Sicherheitselements nach Figur 1 im Querschnitt,
- Figur 4: eine weitere Ausführungsform einer Banknote mit einem erfindungsgemäßen Sicherheitselement,
- Figur 5: eine Ausführungsform einer Vorrichtung zur Überprüfung des erfindungsgemäßen Sicherheitselements, und
- Figur 6: beispielhafte Hysteresekurven von für das erfindungsgemäße Sicherheitselement verwendeten magnetischen Materialien.

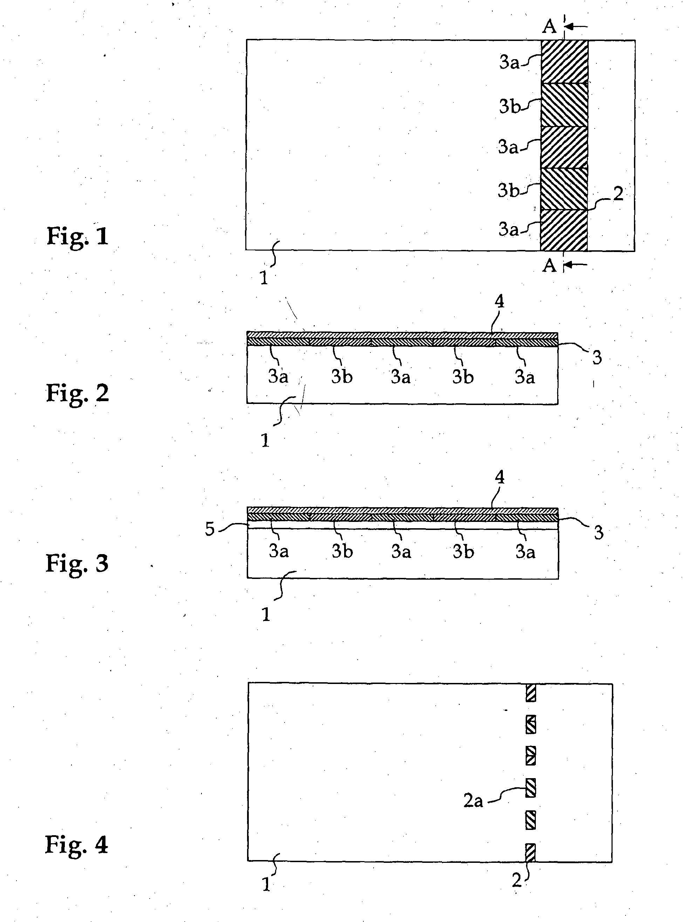

Figur 1 zeigt eine Banknote 1 aus Papier oder Kunststoff, die mit einem über die gesamte Breite der Banknote 1 verlaufenden Sicherheitselement 2 in Form eines Streifens versehen ist. Die Banknote 1 kann selbstverständlich weitere Sicherheitsmerkmale, wie Wasserzeichen, Stahltiefdruck, Sicherheitsfaden, lumineszierende Aufdrucke usw., aufweisen.

Das Sicherheitselement 2 ist auf der Banknote 1 angeordnet, z. B. aufgedruckt, aufgeklebt, in die Banknote 1 eingebracht usw. Das Sicherheitselement 2 weist Bereiche mit magnetischen Materialien 3a, 3b auf, die eine unterschiedlich große Koerzitivfeldstärke aufweisen. Die sich für die Bereiche 3a, 3b ergebende Remanenz ist jedoch gleich groß. Dies kann z. B. durch entsprechende Wahl der Schichtdicke der Bereiche 3a, 3b und/oder durch entsprechende Wahl der Konzentration der magnetischen Materialien 3a, 3b in den Bereichen erreicht werden.

Einige bevorzugte Ausführungsformen werden anhand der Figuren 2 und 3 näher erläutert, welche die Banknote 1 im Querschnitt entlang der strichpunktierten Linie A - A zeigen, um den Aufbau des Sicherheitselements 2 zu verdeutlichen.

Gemäß Figur 2 wird das Papier- oder Kunststoffsubstrat der Banknote 1 mit einer Schicht 3 mit unterschiedlichen magnetischen Materialien 3a, 3b in Form von Flächenbereichen, Zeichen, Mustern usw. versehen. Um die Aufbringung der Schicht 3, z. B. durch Drucken, zu verbessern, kann es insbesondere bei einem Papiersubstrat vorgesehen sein, daß eine sogenannte Primerschicht auf das Papiersubstrat aufgebracht wird. Bei der Primerschicht kann es sich beispielsweise um eine farblose Kunststoff- oder um eine Farbschicht handeln, deren Oberfläche nur eine geringe Rauhigkeit aufweist.

Bei bestimmten Ausführungsformen, z.B. Sicherheitselementen, die im Gebrauch einer starken mechanischen oder chemischen Belastung ausgesetzt sind, bietet es sich an, die magnetischen Materialien 3a, 3b mit einer Schutzschicht 4 abzudecken. Bei der Schutzschicht 4 kann es sich um eine über das Sicherheitselement 2 laminierte Folie oder eine Schutzlackschicht handeln. Die Schutzlackschicht kann dabei vollflächig oder in Teilflächen aufgebracht werden. Dazu können z.B. UV-Lacke, Hybridlacke, Öldrucklacke oder Dispersionslacke vom Ein- bzw. Zweikomponententyp eingesetzt werden. Die Schutzlackschicht wird vorzugsweise aufgedruckt, z.B. mittels Flexodruck oder Offsetdruck.

Das Sicherheitselement 2 kann auch ein separates Element sein, das auf die Banknote 1 aufgebracht werden kann. Das separate Sicherheitselement 2 kann einen Aufbau aufweisen, der dem anhand Figur 3 beschriebenen Aufbau entspricht. In diesem Fall wird ein Substrat 5 des Sicherheitselements 2, z. B. eine Kunststoffolie, auf die Banknote 1 aufgeklebt. Das Substrat 5 des Sicherheitselements 2 weist eine Schicht 3 mit magnetischen Materialien 3a, 3b auf. Dazu kann der das Substrat 5 bildende Kunststoff ein Heißschmelzkleber sein. Zum Schutz der Schicht 3 kann eine Schutzschicht 4 vorgesehen sein.

Abweichend davon kann in und/oder auf das Substrat 5 eine Schicht 3 mit magnetischen Materialien 3a, 3b aufgebracht werden, auf die schließlich eine Klebeschicht 6 aufgebracht wird, mit welcher das Sicherheitselement 2 auf der Banknote 1 befestigt wird. Der dazu verwendete Kleber kann ein Heißschmelzkleber sein. In diesem Fall kann auf eine zusätzliche Schutzschicht verzichtet werden, da diese durch das Substrat 5 gebildet wird.

In allen zuvor beschriebenen Fällen kann der Kleber statt auf das Sicherheitselement 2 auch auf die Banknote 1 aufgebracht werden, um das Sicherheitselement 2 auf der Banknote 1 zu befestigen.

Eine weitere Ausführungsform einer Banknote 1 mit Sicherheitselement 2 ist in Figur 4 dargestellt. Das Sicherheitselement 2 ist dabei zumindest teilweise in das Substrat der Banknote 1 eingebettet, so daß das Sicherheitselement 2, das z. B. ein Sicherheitsfaden ist, nur in bestimmten Bereichen 2a, sogenannten "Fenstern", sichtbar ist. Das Sicherheitselement 2 kann aber auch vollständig im Substrat der Banknote 1 eingebettet sein. In beiden Fällen können die magnetischen Materialien 3a, 3b detektiert werden.

Das Sicherheitselement 2 kann auch als Transfermaterial ausgestaltet sein, mit einem Aufbau wie anhand der Figuren 1 bis 3 beschrieben. In diesem Fall wird der Schichtaufbau in umgekehrter Reihenfolge auf ein Transfermaterial aufgebracht. Das Sicherheitselement 2 wird dann mittels des Transfermaterials auf die Banknote aufgebracht und das Transfermaterial danach ganz oder teilweise entfernt.

Das Sicherheitselement 2 kann auch als sogenannte Planchette ausgebildet sein, die bevorzugt an der Oberfläche des Banknotensubstrats eingebracht wird.

Wie oben beschrieben, kann das Sicherheitselement 2 direkt auf der Banknote 1 hergestellt oder als separates Sicherheitselement 2 zur Verfügung gestellt und auf der Banknote 1 befestigt werden. Es kann aber auch vorgesehen sein, ein separates Sicherheitselement 2 vorzusehen, dessen Aufbau erst vervollständigt wird, z. B. mit einer Schutzschicht versehen wird, nachdem das Sicherheitselement 2 auf der Banknote 1 befestigt wurde.

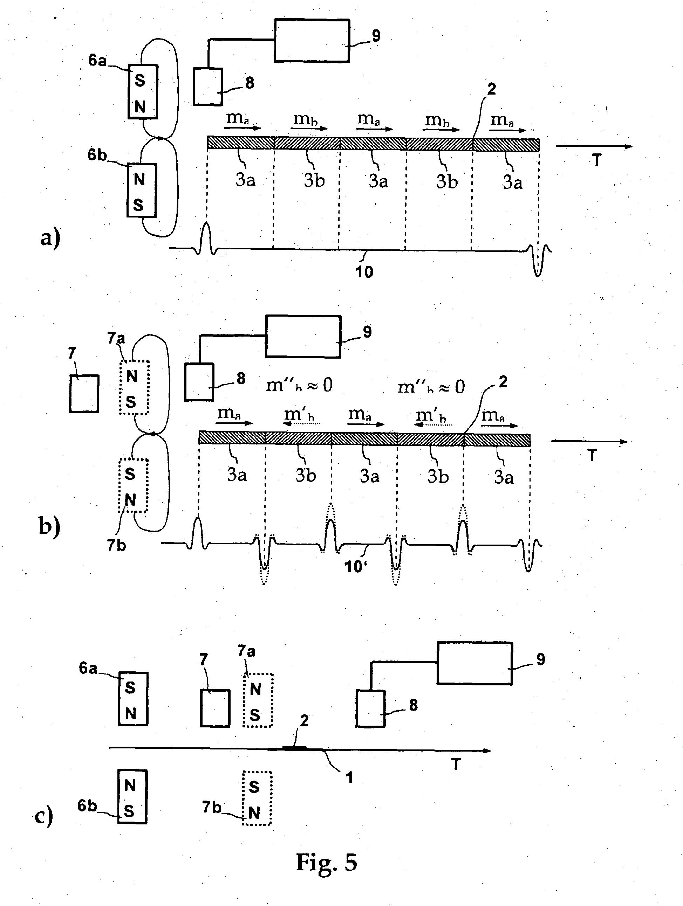

Figur 5 zeigt eine Ausführungsform einer Vorrichtung zur Überprüfung des erfindungsgemäßen Sicherheitselements 2.

In Figur 5a ist eine erste Einrichtung zur Magnetisierung 6 dargestellt, die aus zwei Magneten 6a und 6b besteht. Im dargestellten Beispiel sind die Magnete 6a und 6b mit ihren Nordpolen gegeneinander gerichtet. Es ist jedoch auch möglich, die Magnete 6a und 6b mit ihren Südpolen gegeneinander zu richten. Durch den sich zwischen den Magneten 6a und 6b bildenden Spalt kann eine nicht dargestellte Transporteinrichtung die zu prüfenden Banknoten mit dem Sicherheitselement 2 entlang einer Transportrichtung T führen. Das Sicherheitselement 2 weist bevorzugt aneinandergrenzende Bereiche mit magnetischen Materialien 3a, 3b auf, die eine unterschiedliche Koerzitivfeldstärke aufweisen, wohingegen ihre Remanenz gleich groß ist.

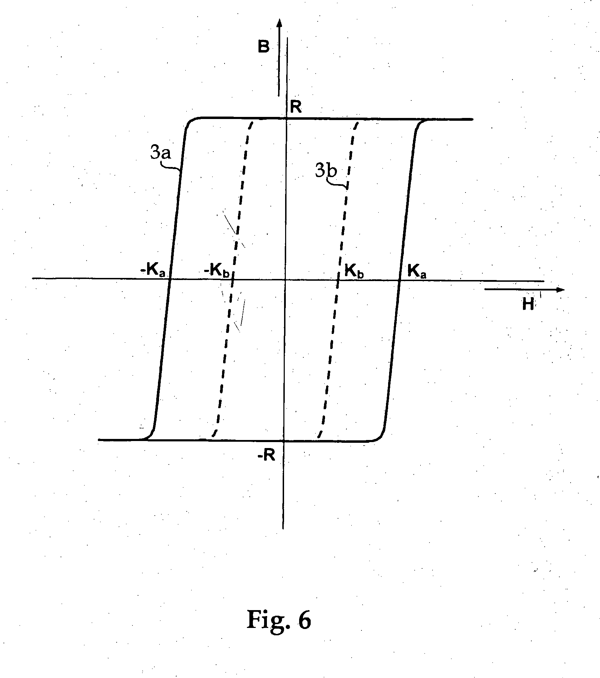

In Figur 6 sind beispielhafte Hysteresekurven von für das erfindungsgemäße Sicherheitselement 2 verwendeten magnetischen Materialien 3a und 3b dargestellt. Wie deutlich zu erkennen ist, weist das erste magnetische Material 3a eine Koerzitivfeldstärke Kₐ auf, die größer als die Koerzitivfeldstärke K_{b} des zweiten magnetischen Materials 3b ist. Die Remanenz R der beiden magenetischen Materialien 3a und 3b ist dahingegen gleich groß, wobei geringfügige Abweichungen zulässig sind. Bei den verwendeten magnetischen Materialien 3a und 3b handelt es sich um hartmagnetische Materialien, die z. B. in Form von Pigmenten vorliegen können, um in der oben beschriebenen Weise in das Sicherheitselement 2 eingebracht zu werden. Bei den magnetischen Materialien 3a und 3b kann es sich beispielsweise um Fe₃O₄-Magnetpigmente handeln, die in unterschiedlichen Koerzitivfeldstärken angeboten werden, z. B. von der Firma BASF. Beispielsweise kann das erste magnetische Material 3a, mit der größeren Koerzitivfeldstärke Kₐ eine Koerzitivfeldstärke von 28 kA/m aufweisen, das zweite magnetische Material 3b mit der kleineren Koerzitivfeldstärke K_{b} hingegen eine Koerzitivfeldstärke von 18 kA/m oder 21 kA/m.

Die in Figur 5a dargestellte ersten Einrichtung zur Magnetisierung 6 weist ein Feldstärke auf, die größer als die größte Koerzitivfeldstärke der verwendeten magnetischen Materialien 3a und 3b ist, also größer als die Koerzitivfeldstärke Kₐ des ersten magnetischen Materials 3a. Dadurch wird bei der Passage der Banknote bzw. des Sicherheitselements 2 sowohl das erste magnetische Material 3a als auch das zweite magnetische Material 3b magnetisiert, so daß die magnetischen Materialien 3a und 3b eine Ausrichtung mₐ und m_{b} aufweisen, entsprechend der Ausrichtung der ersten Einrichtung zur Magnetisierung 6.

Wird die Banknote bzw. das Sicherheitselement 2 im weiteren Verlauf an einem Magnetsensor 8 vorbeitransportiert, ergibt sich bei jeder Änderung des Magnetfelds des Sicherheitselements 2 ein Impuls, der von einer Auswerteeinrichtung 9, beispielsweise einem Mikrocomputer, ausgewertet werden kann, um z. B. Aussagen über die Echtheit und/oder die Art der Banknote machen zu können. Da, wie oben beschrieben, die Remanenz beider magnetischer Materialien 3a und 3b gleich groß ist, und da beide magnetische Materialien 3a und 3b eine gleichartige Ausrichtung mₐ und m_{b} aufweisen, zeigt das vom Magnetsensor 8 stammende Signal 10 Impulse nur zu Beginn und Ende des Sicherheitselements 2.

In Figur 5b ist eine zweite Anordnung zur Magnetisierung 7 dargestellt, die aus zwei Magneten 7a und 7b besteht. Im dargestellten Beispiel sind die Magnete 7a und 7b mit ihren Südpolen gegeneinander gerichtet. Generell ist die Ausrichtung der Magnete 7a und 7b so zu wählen, daß sie der Ausrichtung der Magnete 6a und 6b der ersten Einrichtung zur Magnetisierung 6 entgegengesetzt ist. Durch den sich zwischen den Magneten 7a und 7b bildenden Spalt kann die nicht dargestellte Transporteinrichtung die zu prüfende Banknote mit dem Sicherheitselement 2 entlang der Transportrichtung T führen. Die magnetischen Materialien 3a und 3b weisen die zuvor anhand von Figur 5a beschriebene Ausrichtung mₐ und m_{b} auf. Die zweite Einrichtung zur Magnetisierung 6 weist ein Feldstärke auf, die größer als die Koerzitivfeldstärke K_{b} des verwendeten zweiten magnetischen Materials 3b ist, jedoch kleiner als die Koerzitivfeldstärke Kₐ des ersten magnetischen Materials 3a. Dadurch wird bei der Passage des Banknote bzw. des Sicherheitselements 2 nur das zweite magnetische Material 3b ummagnetisiert, so daß die magnetischen Materialien 3a und 3b unterschiedliche Ausrichtung mₐ und m'_{b} aufweisen. Das vom Magnetsensor 8 stammende Signal 10' zeigt deshalb zusätzlich Impulse an den Stellen des Sicherheitselements 2, an denen die magnetischen Materialien 3a und 3b aneinander grenzen.

Wie in Figur 5b zusätzlich dargestellt, kann die zweite Einrichtung zur Magnetisierung 7 alternativ auch von einem Elektromagneten gebildet werden, der ein magnetisches Wechselfeld erzeugt, dessen Feldstärke ebenfalls größer als die Koerzitivfeldstärke K_{b} des verwendeten zweiten magnetischen Materials 3b ist, jedoch kleiner als die Koerzitivfeldstärke Kₐ des ersten magnetischen Materials 3a. Dadurch wird bei der Passage des Banknote bzw. des Sicherheitselements 2 nur das zweiten magnetische Material 3b entmagnetisiert, so daß das erste magnetischen Material 3a noch seine Ausrichtung mₐ aufweist, wohingegen das zweite magnetische Material 3b keine Ausrichtung m"_{b} mehr aufweist. Das vom Magnetsensor 8 stammende Signal 10' zeigt deshalb auch in diesem Fall zusätzlich Impulse an den Stellen des Sicherheitselements 2, an denen die magnetischen Materialien 3a und 3b aneinander grenzen. Die Impulse sind jedoch kleiner als bei dem zuvor geschilderten Fall, da das magnetische Material 3b keine Ausrichtung m"_{b} mehr aufweist und somit die Änderung der Feldstärke des Magnetfelds des Sicherheitselements 2 an den Grenzen zwischen den magnetischen Materialien 3a und 3b kleiner ist.

In Figur 5c ist ein beispielhafter vollständiger Aufbau einer Vorrichtung zur Überprüfung des erfindungsgemäßen Sicherheitselements 2 dargestellt. Die Vorrichtung setzt sich aus den in den Figuren 5a und 5b dargestellten Bestandteilen, nämlich der ersten Einrichtung zur Magnetisierung 6, der zweiten Einrichtung zur Magnetisierung 7, die wahlweise von Magneten 7a, 7b oder einem Elektromagneten 7 gebildet werden kann, sowie dem Magnetsensor 8 mit der Auswerteeinrichtung 9 zusammen. Zu prüfende Banknoten 1 bzw. Sicherheitselemente 2 können von einem nicht dargestellten Transportsystem entlang der Transportrichtung T durch die Vorrichtung transportiert werden. Von dem Magnetsensor 8 wird das oben in Zusammenhang mit Figur 5b beschriebene Signal 10' erzeugt und von der Auswerteeinrichtung 9 beispielsweise für die Überprüfung der Echtheit und/oder der Art (Währung, Denomination) der Banknote 1 verwendet.

Es ist offensichtlich, daß abweichend von der bisherigen Beschreibung, eine Vielzahl von Änderungen und Variationen möglich sind.

Statt der beschriebenen Verwendung von zwei magnetischen Materialien 3a und 3b für das Sicherheitselement 2 können auch drei, vier oder mehr Materialien verwendet werden. In diesem Fall ist es offensichtlich, daß für die Überprüfung eines derartigen Sicherheitselements auch drei, vier oder mehr Einrichtungen zur Magnetisierung verwendet werden müssen, deren Feldstärken entsprechend der Koerzitivfeldstärken der verwendeten magnetischen Materialien gewählt werden müssen. Ebenso müssen die Einrichtungen zur Magnetisierung entsprechend ihrer Feldstärke angeordnet werden, d. h. gesehen in Transportrichtung muß zuerst die Einrichtung zur Magnetisierung mit der größten Feldstärke angeordnet sein, wohingegen die Einrichtung zur Magnetisierung mit der kleinsten Feldstärke als letzte anzuordnen ist. Dabei ist auch die beschriebene, jeweils entgegengesetzte Ausrichtung des Magnetfelds der verwendeten Einrichtungen zur Magnetisierung zu beachten.

Weiterhin ist neben der erwähnten Erzeugung des Sicherheitselements mittels Drucken mit Farben, die unterschiedliche magnetische Pigmente enthalten, jedes andere Herstellungsverfahren möglich, welches es gestattet gezielt Bereiche mit unterschiedlichen Koerzitivfeldstärken zu erzeugen, wobei alle Bereiche eine im wesentlichen gleich große Remanenz aufweisen sollen. Die magnetischen Materialien können dabei auf die Oberfläche des verwendeten Substrats aufgebracht und/oder in das Substrat eingebracht werden.

Ebenso ist es möglich für die das Sicherheitselement bildenden Bereiche mit unterschiedlichen Koerzitivfeldstärken beliebige Größen und Anordnungen zu wählen, z. B. aus Gesichtspunkten, die sich aus dem Design der das Sicherheitselement aufweisenden Banknote ergeben.

Ebenso ist es möglich, die Einrichtungen zur Magnetisierung 6 und 7 abweichend von der bisherigen Beschreibung anzuordnen. Die Magneten 6a und 6b der ersten Einrichtung zur Magnetisierung 6 können beispielsweise auch mit ihrem Nordpol und Südpol gegeneinander gerichtet sein. Im Unterschied zur der in Figur 5a dargestellten Magnetisierung mₐ, m_{b}, die parallel zur Ebene der Banknote bzw. des Sicherheitselements 2 erfolgt, ergibt sich in diesem Fall eine Magnetisierung senkrecht zur Ebene der Banknote bzw. des Sicherheitselements 2. Werden auch für die zweite Einrichtung zur Magnetisierung 7 Magneten 7a und 7b verwendet, müssen diese selbstverständlich entgegengesetzt angeordnet sein, d. h. in diesem Fall muß Südpol gegen Nordpol gerichtet sein. Die zuvor beschriebene Anordnung der Magneten 6a und 6b bzw. der Magneten 7a und 7b kann natürlich auch in umgekehrter Reihenfolge vorgenommen werden, solange sich die oben beschriebene Ummagnetisierung durch die zweite Einrichtung zur Magnetisierung 7 ergibt. Ebenso ist es möglich - wie oben beschrieben -, die zweite Einrichtung zur Magnetisierung 7 mittels eines Elektromagneten mit einem Wechselfeld zu bilden.

Werden die Einrichtungen zur Magnetisierung 6 und 7 von Permanentmagneten gebildet, könne diese beispielsweise aus SmCo, NdFeB oder SrFe bestehen und die beschriebenen Feldstärken aufweisen.

Ebenso kann es vorgesehen sein, nach erfolgter Prüfung des mittels der magnetischen Materialien 3a und 3b gebildeten Sicherheitsmerkmals erkennbare unterschiedliche Ausrichtung mₐ und m_{b} zu beseitigen, damit keine zufällige Erkennung des Sicherheitsmerkmals möglich ist. Dazu kann ein Löschvorgang durchgeführt werden, bei dem die unterschiedlichen Ausrichtung mₐ und m_{b} aufgehoben werden. Dies kann dadurch erreicht werden, daß, in Transportrichtung T gesehen, eine dritte Einrichtung zur Magnetisierung (nicht dargestellt) nach dem Magnetsensor 8 angeordnet wird. Die dritte Einrichtung zur Magnetisierung kann beispielsweise eine Feldstärke aufweisen, die größer als die größte Koerzitivfeldstärke der verwendeten magnetischen Materialien 3a und 3b ist, also größer als die Koerzitivfeldstärke Kₐ des ersten magnetischen Materials 3a. Dadurch wird bei der Passage der Banknote bzw. des Sicherheitselements 2 sowohl das erste magnetische Material 3a als auch das zweite magnetische Material 3b magnetisiert, so daß die Ausrichtung mₐ und m_{b} der magnetischen Materialien 3a und 3b gleich ist. Die dritte Einrichtung zur Magnetisierung kann dazu ein wahlweise ein Gleich- oder Wechselfeld erzeugen.

## Patentansprüche

1. Sicherheitselement zur Absicherung von Wertgegenständen, wobei das Sicherheitselement mindestens zwei magnetische Materialien (3a, 3b) aufweist, die eine unterschiedlich große Koerzitivfeldstärke (Kₐ, K_{b}) aufweisen, **dadurch gekennzeichnet, daß** die mindestens zwei magnetischen Materialien (3a, 3b) derart auf und/oder in das Sicherheitselement auf- und/ oder eingebracht sind, daß ihre Remanenz (R) im wesentlichen gleich groß ist.

2. Sicherheitselement nach Anspruch 1, **dadurch gekennzeichnet, daß** die unterschiedlichen magnetischen Materialien (3a, 3b) unterschiedliche Schichtdicken und/ oder unterschiedliche Konzentrationen aufweisen.

3. Sicherheitselement nach Anspruch 1 oder 2, **dadurch gekennzeichnet, daß** die magnetischen Materialien (3a, 3b) bereichsweise aufgebracht werden, insbesondere in Form von alphanumerischen Zeichen und/ oder Mustern.

4. Sicherheitselement nach einem der Ansprüche 1 bis 3, **dadurch gekennzeichnet, daß** das Sicherheitselement (2) ein Sicherheitsfaden oder eine Planchette ist.

5. Wertdokument, **dadurch gekennzeichnet, daß** es ein Sicherheitselement nach einem der Ansprüche 1 bis 4 aufweist.

6. Transfermaterial zur Herstellung eines Sicherheitselements, das ein Trägermaterial aufweist, auf welchem mindestens zwei magnetische Materialien (3a, 3b) angeordnet sind, die eine unterschiedlich große Koerzitivfeldstärke (Kₐ, K_{b}) aufweisen, **dadurch gekennzeichnet, daß** die mindestens zwei magnetischen Materialien (3a, 3b) derart auf und/oder in das Sicherheitselement auf- und/ oder eingebracht sind, daß ihre Remanenz (R) im wesentlichen gleich groß ist.

7. Transfermaterial nach Anspruch 6, **dadurch gekennzeichnet, daß** das Trägermaterial als Heißprägefolie ausgebildet ist.

8. Verfahren zur Herstellung eines Wertgegenstandes oder Sicherheitselementes, bei dem
- ein Substrat (1) zur Verfügung gestellt wird,
- auf und/oder in dieses Substrat (1) mindestens zwei magnetische Materialien (3a, 3b) auf- und/ oder eingebracht werden, die eine unterschiedlich große Koerzitivfeldstärke (Kₐ, K_{b}) aufweisen, wohingegen ihre Remanenz (R) im wesentlichen gleich groß ist.

## Claims

1. A security element for protecting objects of value, with the security element having at least two magnetic materials (3a, 3b) which have a different coercive field strength (Kₐ, K_{b}), **characterized in that** the at least two magnetic materials (3a, 3b) are applied to and/or incorporated into the security element such that their remanence (R) is substantially equal.

2. The security element according to claim 1, **characterized in that** the different magnetic materials (3a, 3b) have different layer thicknesses and/or different concentrations.

3. The security element according to claim 1 or 2, **characterized in that** the magnetic materials (3a, 3b) are applied in certain regions, in particular in the form of alphanumeric characters and/or patterns.

4. The security element according to any of claims 1 to 3, **characterized in that** the security element (2) is a security thread or a planchet.

5. A value document, **characterized in that** it has a security element according to any of claims 1 to 4.

6. A transfer material for producing a security element having a carrier material on which are disposed at least two different magnetic materials (3a. 3b) having a different coercive field strength (Kₐ, K_{b}), **characterized in that** the at least two magnetic materials (3a, 3b) are applied to and/or incorporated into the security element such that their remanence (R) is substantially equal.

7. The transfer material according to claim 6, **characterized in that** the carrier material is configured as a hot stamping foil.

8. A method for producing an object of value or security element, wherein
- a substrate (1) is made available,
there are applied to and/or incorporated into said substrate (1) at least two magnetic materials (3a. 3b) which have a different coercive field strength (Kₐ, K_{b}), whereas their remanence (R) is substantially equal.

## Revendications

1. Élément de sécurité destiné à la sécurisation d'objets de valeur, l'élément de sécurité comportant au moins deux matériaux magnétiques (3a, 3b) qui présentent une intensité de champ coercitif (Kₐ, K_{b}) différemment élevée, **caractérisé en ce que** les au moins deux matériaux magnétiques (3a, 3b) sont appliqués et/ou incorporés de telle manière sur et/ou dans l'élément de sécurité que leur rémanence (R) est essentiellement égale.

2. Élément de sécurité selon la revendication 1, **caractérisé en ce que** les matériaux magnétiques (3a, 3b) différents présentent des épaisseurs de couche différentes et/ou des concentrations différentes.

3. Élément de sécurité selon la revendication 1 ou 2, **caractérisé en ce que** les matériaux magnétiques (3a, 3b) sont appliqués sur certaines zones, notamment sous forme de caractères alphanumériques et/ou de motifs.

4. Élément de sécurité selon une des revendications de 1 à 3, **caractérisé en ce que** l'élément de sécurité (2) est un fil de sécurité ou une planchette.

5. Document de valeur, **caractérisé en ce qu'**il comporte un élément de sécurité selon une des revendications de 1 à 4.

6. Matériau de transfert destiné à la fabrication d'un document de valeur, comportant un matériau support sur lequel au moins deux matériaux magnétiques (3a, 3b) présentant une intensité de champ coercitif (Kₐ, K_{b}) différemment élevée sont agencés, **caractérisé en ce que** les au moins deux matériaux magnétiques (3a, 3b) sont appliqués et/ou incorporés de telle manière sur et/ou dans l'élément de sécurité que leur rémanence (R) est essentiellement égale.

7. Matériau support selon la revendication 6, **caractérisé en ce que** le matériau support est réalisé sous forme de feuille gaufrée à chaud.

8. Procédé de fabrication d'un document de valeur ou d'un objet de valeur, dans lequel
- un substrat (1) est mis à disposition,
- sur et/ou dans ce substrat (1), au moins deux matériaux magnétiques (3a, 3b) présentant une intensité de champ coercitif (Kₐ, K_{b}) différemment élevée sont appliqués et/ou incorporés, leur rémanence (R) étant par contre essentiellement égale.
